# EUROPEAN PATENT SPECIFICATION

(11) **EP 3 992 942 B1**
(45) Date of publication and mention of the grant of the patent: **13.03.2024**
(21) Application number: 20205090.2
(22) Date of filing: 02.11.2020
(51) Int. Cl.: G08G 1/16, G06T 7/246, G06V 10/764, G06V 20/56

(54) **METHODS AND SYSTEMS FOR DETERMINING AN ATTRIBUTE OF AN OBJECT AT A PRE-DETERMINED POINT**
VERFAHREN UND SYSTEME ZUR BESTIMMUNG EINES ATTRIBUTS EINES OBJEKTS AN EINEM VORBESTIMMTEN PUNKT
PROCÉDÉ ET SYSTÈME PERMETTANT DE DÉTERMINER UN ATTRIBUT D'UN OBJET AU NIVEAU D'UN POINT PRÉDÉTERMINÉ

(43) Date of publication of application: 04.05.2022
(73) Proprietor: Aptiv Technologies Limited, St. Michael (BB)
(72) Inventor: ZHAO, Kun, 47059 Duisburg (DE); ANDELIC, Edin, 58095 Hagen (DE); MEUTER, Mirko, 40699 Erkrath (DE); ALASHQAR, Abdallah, 42103 Wuppertal (DE)
(74) Representative: Manitz Finsterwald Patent- und Rechtsanwaltspartnerschaft mbB

(56) References cited:
- US-A1- 2019 049 987
- US-A1- 2019 147 255
- US-A1- 2019 179 328
- US-A1- 2019 361 454

## Description

### FIELD

The present disclosure relates to methods and systems for determining an attribute of an object at a pre-determined point.

### BACKGROUND

Trajectory prediction may be an important task for (at least partially) autonomously driving vehicles. However, commonly used methods for trajectory prediction may be computationally expensive and/or inaccurate.

Accordingly, there is a need to provide enhanced methods for trajectory prediction.

US 2019/049987 A1 discloses systems and methods for predicting object motion and controlling autonomous vehicles are provided. In one example embodiment, a computer implemented method includes obtaining state data indicative of at least a current or a past state of an object that is within a surrounding environment of an autonomous vehicle. The method includes obtaining data associated with a geographic area in which the object is located. The method includes generating a combined data set associated with the object based at least in part on a fusion of the state data and the data associated with the geographic area in which the object is located. The method includes obtaining data indicative of a machine-learned model. The method includes inputting the combined data set into the machine-learned model. The method includes receiving an output from the machine-learned model. The output can be indicative of a predicted trajectory of the object.

US 2019/179328 A1 discloses a method and system for predicting a near future path for a vehicle. For predicting the near future path sensor data and vehicle driving data is collected. Road data is collected indicative of a roadway on the presently occupied road for the vehicle. The sensor data and the vehicle driving data is pre-processed to provide object data comprising a time series of previous positions, headings, and velocities of each of the objects relative the vehicle. The object data, the vehicle driving data, and the road data is processed in a deep neural network to predict the near future path for the vehicle.

US 2019/147255 A1 discloses systems and methods for generating sparse geographic data for autonomous vehicles are provided. In one example embodiment, a computing system can obtain sensor data associated with at least a portion of a surrounding environment of an autonomous vehicle. The computing system can identify a plurality of lane boundaries within the portion of the surrounding environment of the autonomous vehicle based at least in part on the sensor data and a first machine-learned model. The computing system can generate a plurality of polylines indicative of the plurality of lane boundaries based at least in part on a second machine-learned model. Each polyline of the plurality of polylines can be indicative of a lane boundary of the plurality of lane boundaries. The computing system can output a lane graph including the plurality of polylines.

### SUMMARY

The present disclosure provides a computer implemented method, a computer system, a vehicle, and a non-transitory computer readable medium according to the independent claims. Embodiments are given in the subclaims, the description and the drawings.

In one aspect, the present disclosure is directed at a computer implemented method for determining an attribute of an object at a pre-determined point according to claim 1.

The attribute of the object may be a probability of an accident in which the object is involved, a probability of a collision involving the object, a location of the object, a speed of the object, a linear velocity of the object, a rotational speed of the object, a distance of the object to a middle of a lane on which the object is located, a lane driving direction of a lane in which the object is, a type of left and right markings of the lane in which the object is, a condition of the lane in which the object is, a breaking light status of the object, or a turning light status of the object.

The image-like data structure has a format (for example data format) of an image. However, if the image-like data structure would be displayed by a method for displaying images, this would not lead to displaying an image showing an actual scene that could be interpreted by a human observer. Rather, the image-like data structure stores information related to properties of various objects (the object (which may also be referred to as the target object) and further objects). For example, each property may be indicated by a number, for example a real number or an integer number in the image-like data representation. It will be understood that the image-like data structure may also be referred to as image-like data representation or as image.

The expression "determining the attribute" may be understood as determining the attribute at a time point at which no information is available, neither information related to the object nor information (for example properties) of the other

The method may solve the problem of machine learning based object trajectory prediction regarding to static driving environment. By forming a 2D image-like multi-channel data structure including the lane information and the target dynamic information, the correlation between them can be learned in a machine learning system.

The method may learn the static context for trajectory prediction.

The method may utilize understanding of driver behaviour within road lanes by structuring the neural network based on static road feature context information for vehicle trajectory prediction

According to the invention, the object is a vehicle.

The items comprise lane markings, road boundaries, guard rails, or barriers.

The plurality of points comprise past time points, and wherein the pre-determined point is a time point succeeding the plurality of time points; or the plurality of points comprise future time points, and wherein the pre-determined point is a time point preceding the plurality of time points.

When the plurality of points includes future time points, and the pre-determined point is a time point preceding the plurality of time points, this may mean that determining (for example predicting) the attribute may include or may be determining the attribute at a past time point. For example, if future information is available (for which it may be known that a critical situation happened), but past information is not available, then the past information may be estimated to determinate the past information.

It will be understood that "future" time points are time points after the pre-determined time point and that recorded information is used

The plurality of points comprise past spatial points along a past trajectory of the object, and wherein the pre-determined point is a location succeeding the plurality of past spatial points; or the plurality of points comprise future spatial points along a future trajectory of the object, and wherein the pre-determined point is a location preceding the plurality of future spatial points.

The property comprises at least one of an x position, a y position points, a validness flag, a lane marking type flag, or a color flag.

According to another aspect, the pre-determined rule takes image data as input data. In other words, the pre-determined rule is a rule which usually operates on images. Since the data representing the properties for the various objects at the various time points is arranged in the image-like data structure, the rule which usually operates on images may be used without modification or with minimum modification (for example to adapt to a number of channels different from 1 or different from 3).

The pre-determined rule includes a neural network, for example a convolutional neural network (CNN), for example a temporal convolution network (TCN). The neural network may be trained with training data comprising a plurality of training images, wherein each training image includes data arranged according to the image-like data structure, and wherein each training image is associated with a training attribute of the object.

According to another aspect, the computer implemented method may further comprise the following step carried out by the computer hardware components: assigning a pre-determined value to an entry of the image-like data structure if a property is not available for the object and the point of time corresponding to the entry.

It has been found that instead of providing several image-like data structures of different sizes (in particular when using neural networks, which have to be trained using training images of a fixed size which is identical to the size of images used during normal operation after training), a single, fixed size of the image-like data structure may be used, and entries (in other words: pixels) of the image-like data structure for which no information is available may be filled with a pre-determined value or flag (for example the value zero ("0")). For example, if the number of further objects is less than the maximum number of further objects that could be represented in the image-like data structure, for example when the number of rows of the image-like data structure is more than the number of further objects plus one (for the target object), the remaining rows (which are not assigned to the object or to any one of the further objects) may be filled with the pre-determined value. For example, if one of the further objects (or the target object) was not observed during a certain period of time, and as such no data representing the property of that further object (or of the target object) is available for the time points corresponding to the certain period of time, the respective entries of the image-like data structure may be filled with the pre-determined value.

Various embodiments may be applied to collision prediction and/or maneuver prediction and/or future trajectory prediction. For various levels of assisted or autonomous driving (for example L2/L3/L4 AD applications), the ego vehicle needs to plan its action in advance, and to do that, it needs to have information about the road and corresponding markings and the like.

The computer implemented method further comprises the following step carried out by the computer hardware components:
estimating a potential risk of collision based on the determined attribute and/or
determining a trajectory of the object to be followed for autonomous motion (for example for autonomous driving or assisted driving) of the object based on the determined attribute. It has been found that based on the determined attribute, a reliable and efficient estimation of a potential risk of collision and efficient determination of a desired trajectory is possible.

As an alternative, the computer implemented method further comprises the following steps carried out by the computer hardware components: determining a maneuver to be executed based on the determined attribute. It has been found that based on the determined attribute, a reliable and efficient determination of a maneuver to be executed may be carried out.

According to another aspect, the maneuver to be executed may include or may be at least one of: accelerating, braking, steering, changing lane to the left, changing lane to the right, outputting a warning indication, switching on hazard warning lights, or activating a horn.

With the method, a dense, efficient and meaningful data representation for convolutional operation may be provided. The method may allow for easy integration with existing trajectory prediction systems to bring the static-context awareness into the system. The method may be deployed for highway application in real world system.

The method may provide a dense and efficient data representation; the image like data structure (which may also be referred to as static-context image) may be very small in practice. The method may be extension friendly; guard rail, barrier, road boundaries, etc. may be easily included into the static-context image.

The method may provide a small and efficient network design. The CNN for static-context learning may be very small and shallow, and may thus have only a small computational burden.

Together with European patent application No. 19202631.8, a fully context-aware (scene understanding) trajectory prediction system may be provided. L2+/L3 highway applications may be provided.

The method may provide a performance improvement compared to other methods.

In another aspect, the present disclosure is directed at a computer system, said computer system comprising a plurality of computer hardware components configured to carry out several or all steps of the computer implemented method described herein.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at vehicle comprising the computer system as described herein.

According to another aspect, the vehicle further comprises a sensor configured to determine sensor data; wherein the properties are determined based on the sensor data.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1A: an illustration of a vehicle;
- Fig. 1B: an illustration of the vehicle;
- Fig. 1C: an illustration of the vehicle;
- Fig. 2: an illustration of a convolutional neural network;
- Fig. 3: an illustration of lane marking rasterization according to various embodiments;
- Fig. 4: an illustration of how to rasterize a whole road structure according to various embodiments;
- Fig. 5: an illustration of how to represent the complete driving scene according to various embodiments;
- Fig. 6: an illustration of an application of the 2D image-like data structure for trajectory prediction according to various embodiments;
- Fig. 7: an illustration of an example of a road rasterization of a highway according to various embodiments;
- Fig. 8: an illustration of an example of a road rasterization of a highway according to various embodiments;
- Fig. 9: a flow diagram illustrating a method for determining an attribute of an object at a pre-determined point according to various embodiments;
- Fig. 10: an attribute determination system according to various embodiments; and
- Fig. 11: a computer system with a plurality of computer hardware components configured to carry out steps of a computer implemented method for determining an attribute of an object at a pre-determined point according to various embodiments.

### DETAILED DESCRIPTION

Lane markings and other similar road structures like guard rails, road boundaries, barriers, are the most important road, which may influence the road users' behavior and trajectory. They may represent the traffic rules, and may regulate the road user's individual driving behaviors into systematic patterns. But even for the relatively simply highway road, modeling such behavior of the road user with their driving environment may already not be easy. The trajectory prediction may be a necessary component for the lots of safety features and autonomous driving.

A problem of trajectory prediction may for example be formulated as follows: "The target vehicle is driving fast. Where will it be in e.g. 2 second?"

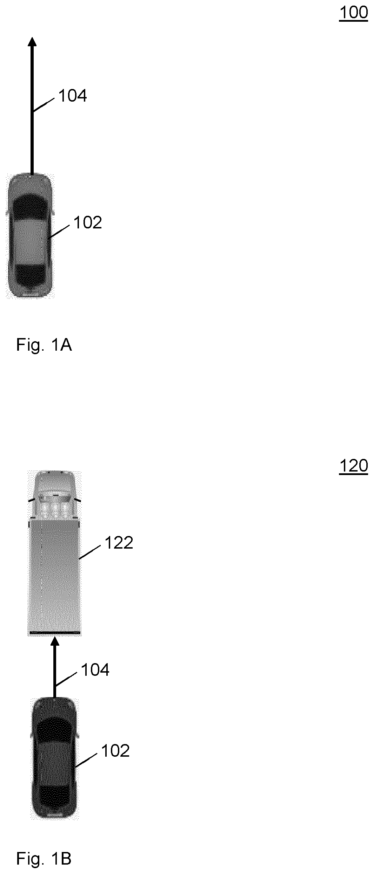

Fig. 1A shows an illustration 100 of a vehicle 102 and an arrow 104 indicating the present speed of the vehicle 102. For example, based on given physical properties (like target position, velocity, and/or acceleration) the trajectory of the vehicle 102 may be predicted.

However, it may not only be the physical properties that may have an impact on the trajectory, but also the dynamic context.

The dynamic-context may include the interaction between the target and its neighbors.

Fig. 1B shows an illustration 120 of the vehicle 102 and the arrow 104 indicating the present speed of the vehicle 102. Furthermore, a further vehicle 122 is illustrated to be driving in front of the vehicle 102. Thus, the trajectory of the vehicle 102 may also be influenced by the dynamic context, which may for example include other road users.

However, it may not only be the physical properties and the dynamic context that may have an impact on the trajectory, but also the static context.

The static context may include the road structure, for example the road in front of the target, which may restrict and regulate the vehicle's future trajectory. For example, a vehicle may be driving straight forward, and if the road in front has a curve, then the prediction system should be able to make the conditional prediction based on the road lane information and predict a realistic curved future trajectory, even when the vehicle does not show any sign of turning yet. According to various embodiments, such road information may be properly integrated into a machine-learning based system.

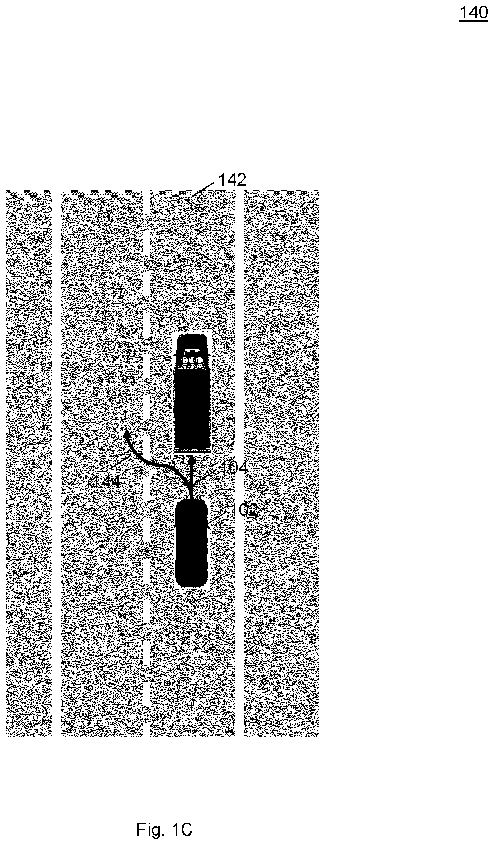

Fig. 1C shows an illustration 140 of the vehicle 102 and the arrow 104 indicating the present speed of the vehicle 102, and the further vehicle 122 driving in front of the vehicle 102. Furthermore, the road 142 is illustrated. Thus, the trajectory of the vehicle 102 may also be influenced by the static context, which may for example include the road, lanes, or the like. For example, the vehicle 102 may break and keep a safe distance, or change the lane (like indicated by arrow 144).

There may be a strong spatial (for example local) correlation between the future trajectory and static-context. According to various embodiments, an efficient solution to learn such correlation from the data without explicit modeling may be provided.

According to various embodiments, a convolutional neural network (CNN) may be used to learn the correlation between the "road" (for example road structure) and the vehicle trajectory.

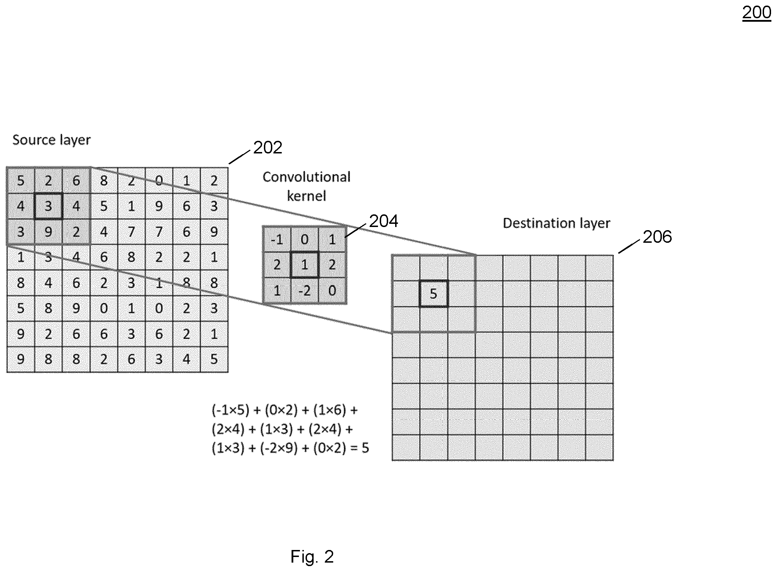

Fig. 2 shows an illustration 200 of a convolutional neural network with a source layer 202, a convolutional kernel 204, and a destination layer 206.

According to various embodiments, the static-context for trajectory prediction for highway driving may be learned using machine learning techniques. The static-context covers lane markings, road boundaries, guard rails, barrier, or other similar structures typically seen on the highway. According to various embodiments, a data representation may be provided, which may enable efficient static-context learning using convolutional neural networks (CNN).

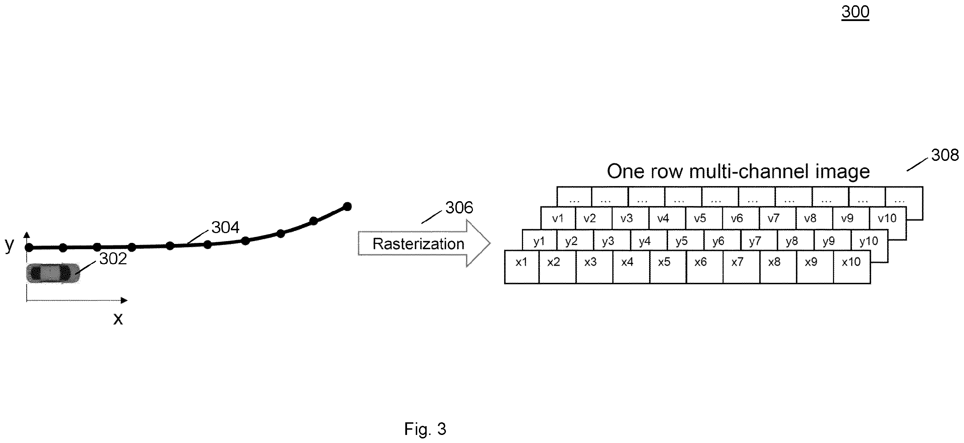

It will be understood that the human driver's behaviors and trajectories may have a very strong spatial correlation with its surrounding environment. To mathematically model this correlation may be beyond feasibility because of the huge variations of road structures. At the same time, CNN may be a tool for exploiting the spatial correlation in image-like data, which is why CNNs may be used for object detection and classification in image domain. According to various embodiments, the road structure information and the vehicle trajectory may be presented in a proper way that the CNN can be deployed efficiently for static-context learning. Using lane marking as example, according to various embodiments, a single image row data representation may be built by rasterization. This is explained in Fig. 3 below. Other road structures, e.g. guard rail, barrier, road boundaries, etc. may be rasterized the same way.

Fig. 3 shows an illustration 300 of lane marking rasterization according to various embodiments. A vehicle 302 and a corresponding coordinate system x,y (in vehicle coordinates) is illustrated. A lane marking 304 (with discrete points on the lane marking marked with bold circles) are illustrated. By rasterization 306, a one row multi-channel image 308 may be determined.

The image width may be obtained by sampling at discrete longitudinal positions (indicated by the bold circles) along the lane marking 304.

There may be different possibilities to define the sampling positions.

For example, the sampling positions may be defined with a pre-defined distance interval in between. For example, the sampling positions may be sampled longitudinally at 0,1,2,3,... meters along the lane marking, and their lateral offsets may be another other features to create the above one-row image.

In another example, the sampling positions may be defined with a pre-defined time interval in between. For example, if the target vehicle's longitudinal velocity is vx, then the sampling positions may be sampled at vx*t1, vx*t2, vx*t3,..., along the marking (for example with equidistant time points t1, t2, t3, ...).

A plurality of image channels of each pixel may store all the useful information of the corresponding sampling point one the lane marking, for example: x position of the points, y position of the points, validness flag of the points, lane marking type flag, color flag. It will be understood that any other information may be integrated as extra channels.

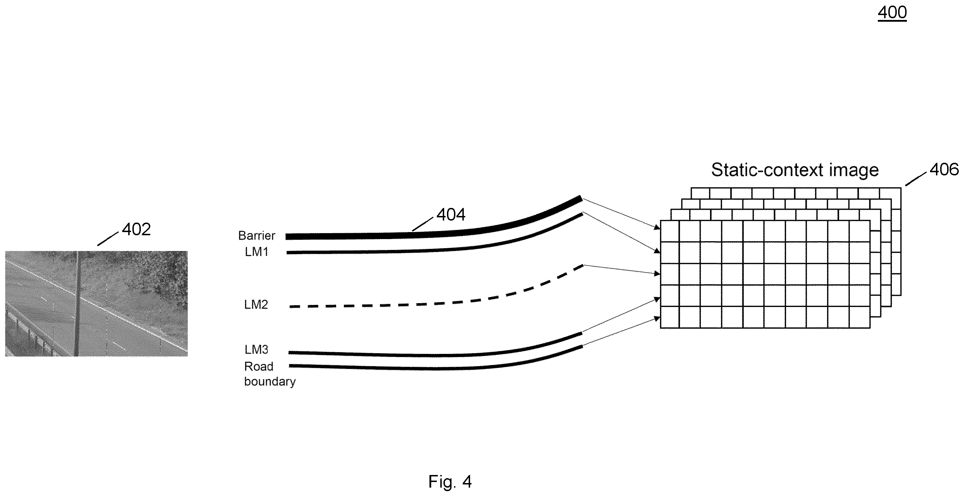

As described above, one lane marking may create a one-row image. Similarly, a multi-lane road with multiply lane markings or boundaries or the like may be rasterized into a 2D multi-channel image, like illustrated in Fig. 4.

Fig. 4 shows an illustration 400 of how to rasterize a whole road structure according to various embodiments. An image 402 illustrates the road, and the road structure is illustrated including a barrier 404, a first lane marking (LM1), a second lane marking (LM2), a third lane marking (LM3), and a road boundary. The properties of each of the barrier 404, the first lane marking (LM1), the second lane marking (LM2), the third lane marking (LM3), and the road boundary may be provided a specific row of the static-context image 406 (for example, the properties of the barrier 406 may go into the first row of the static-context image 406.

Thus, with multiple lane markings on the road, a 2D multi-channel image may be created.

The image height of the image 406 depends on the number of lane markings or boundaries or barriers or the like.

For example, as illustrated in Fig. 4, a 2 lanes highway with 3 LM (lane markings) may be rasterized into an image with 3 image rows.

It will be understood that guard rail, jersey barrier, road boundary, and the like may be rasterized in the same way.

Because of the semantic definition of each image row, the height of the image may be fixed.

As can be seen, the data structure (of the image 406) may be very compact, and each image row may represent one lane marking, and the image width may represent the range that the lane marking is discretized. The multiple channels may store all the information of the sampling points.

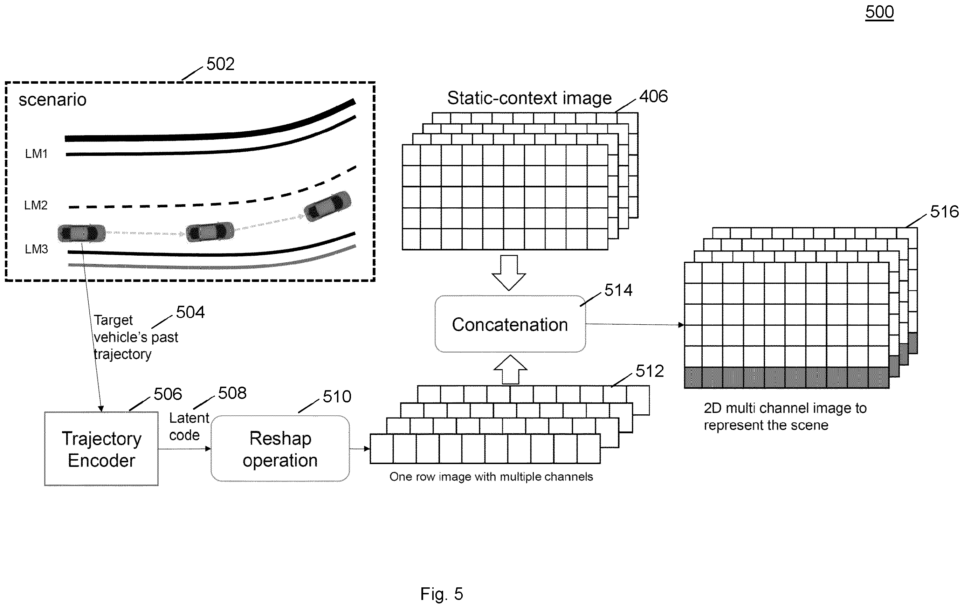

According to various embodiments, the trajectory information of the target vehicle may be brought together with the static context image 406 to enable the application of CNN for learning, like illustrated in Fig. 5.

Fig. 5 shows an illustration 500 of how to represent the complete driving scene (for example in a 2D image-like driving scene representation) according to various embodiments.

A scenario 502 is illustrated. The vehicle's past trajectory 504 may be encoded using a trajectory encoder 506, to generate a latent code 508, which, with a reshape operation 510 may be brought into a one-row image with multiple channels 512. For example, for the trajectory encoder, the method described in European patent application No. 19202631.8, may be used. The one-row image with multiple channels 512 (which represents the target vehicle's past trajectory 504) may be concatenated (514) with the static-context image 406, to obtain a 2D multi-channel image 516 to represent the scene (wherein the bottom row of the 2D multi-channel image 516 may correspond to (or be identical to) the one-row image with multiple channels 512, like illustrated by filling the respective entries in gray.

As illustrated in Fig. 5, the dynamic information of the target vehicle may be encoded with a trajectory encoder, which itself may be a deep neural network, to provide a latent code representation for the target movement. This latent code may then be reshaped into a 1 row image, with the same width and depth as the rasterized road structure image. Then a concatenation operation may provide a 2D image which represents the driving scene. As an example of thus trajectory encoder, the above reference European patent application No. 19202631.8 describes one such network design, which learns the target's dynamic context.

Based on the concatenated image 516, the trajectory may be predicted.

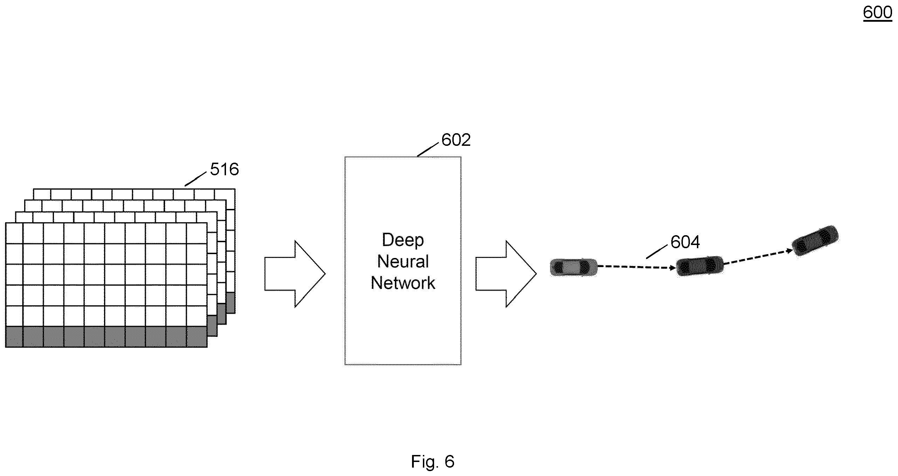

Fig. 6 shows an illustration 600 of an application of the 2D image-like data structure 516 for trajectory prediction according to various embodiments. The 2D multi-channel image 516 to represent the scene may provide a small, dense data representation, and may be provided to a deep neural network 602. For example, the deep neural network may be a CNN, a CNN plus a LSTM (long short-term memory), a ConvLSTM (convolutional LSTM) or the like. The deep neural network 602 may output a predicted future trajectory 604.

With this 2D image 516, the application of various DNN may be provided. A CNN, or a CNN in combination with a RNN, or directly a ConvLSTM may be used as the deep neural network 602.

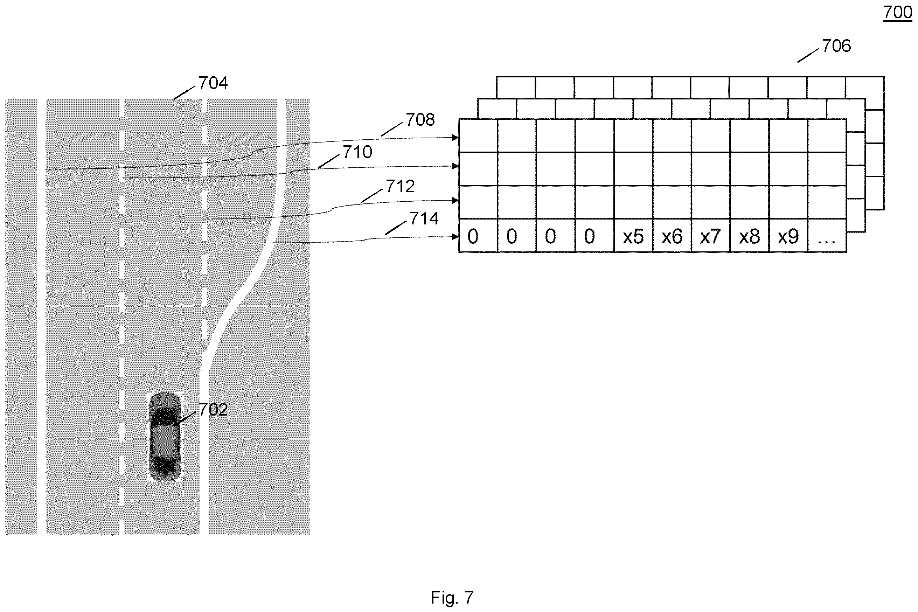

Fig. 7 shows an illustration 700 of an example of a road rasterization of a highway according to various embodiments. A vehicle 702 is shown on a highway 704. Properties of a left boundary may be provided in a first row of the multi-channel image like data structure 706, like illustrated by arrow 708. Properties of a first lane marking may be provided in a second row of the multi-channel image like data structure 706, like illustrated by arrow 710. Properties of a second lane marking may be provided in a third row of the multi-channel image like data structure 706, like illustrated by arrow 712. Properties of a right boundary may be provided in a fourth row of the multi-channel image like data structure 706, like illustrated by arrow 714.

For example, the road opens a further lane on the right, meaning that the x coordinate of the right boundary increases, like illustrated in the last row of the multi-channel image like data structure 706.

For an autonomously driving vehicle, the following highway lateral movements may be available: keep lane, lane change to the left, and lane change to the right. Depending on target in-lane position, modeling three lanes with four lane markings (for example a left boundary, a first lane marking, a second lane marking, and a right lane marking) may be sufficient for highway application, including target lane, adjacent left and right lanes.

As illustrated in Fig. 7, a lane split may mean that before the split the data is filled with 0, including its validness feature, and afterwards, non-zero values (x5, x6, x7, x8, x9, ...) are provided.

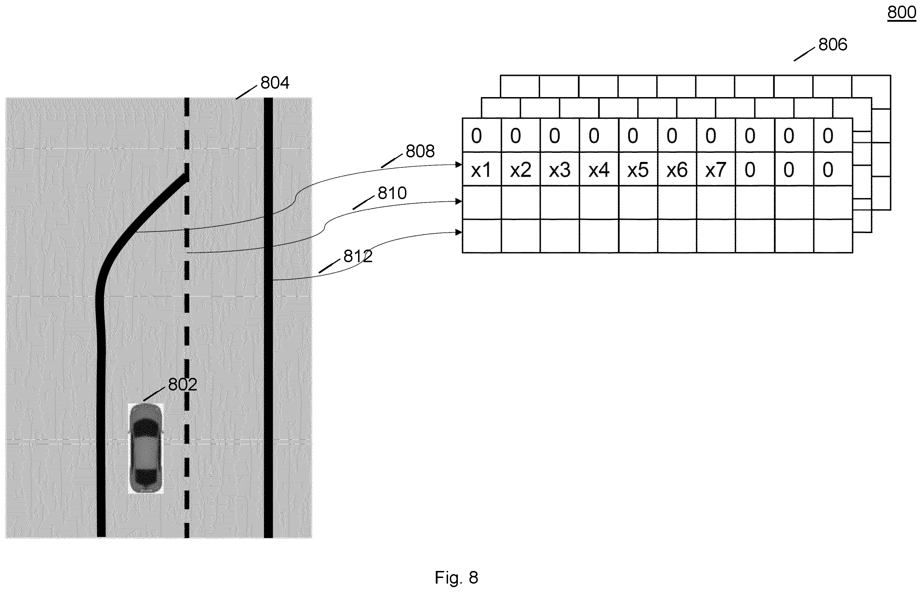

Fig. 8 shows an illustration 800 of an example of a road rasterization of a highway according to various embodiments. A vehicle 802 is shown on a highway 804. Properties of a left boundary may be provided in a second row of the multi-channel image like data structure 806, like illustrated by arrow 808. Properties of a middle lane marking may be provided in a third row of the multi-channel image like data structure 806, like illustrated by arrow 810. Properties of a right boundary may be provided in a fourth row of the multi-channel image like data structure 806, like illustrated by arrow 812.

It will be understood that even though only three lane markings are present, in order to make it possible to capture the road scenario illustrated in Fig. 7, four rows may be provided in the multi-channel image like data structure 806 of Fig. 8. In other words, the non-existing lane marking can be filled with 0 values.

For the lane merging scenario, the merged lane markings can be filled with 0 values (as for example illustrated in the second row of the multi-channel image like data structure 806 in Fig. 8).

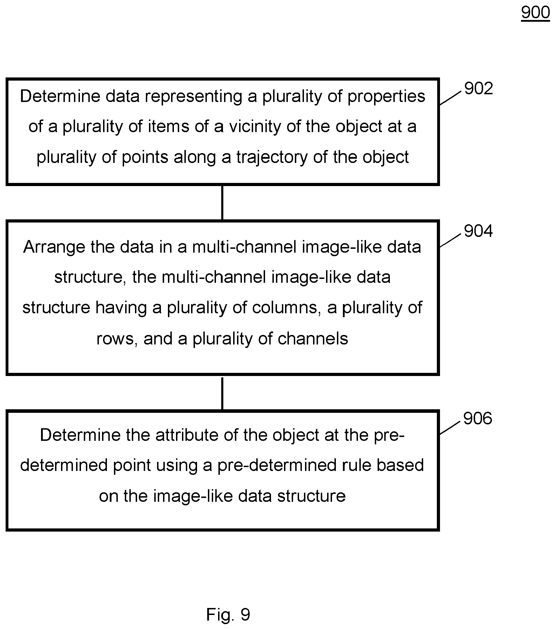

Fig. 9 shows a flow diagram 900 illustrating a method for determining an attribute of an object at a pre-determined point.

At 902, data representing a plurality of properties of a plurality of items of a vicinity of the object at a plurality of points along a trajectory of the object may be determined. At 904, the data may be arranged in a multi-channel image-like data structure, the multi-channel image-like data structure having a plurality of columns, a plurality of rows, and a plurality of channels, wherein the data is arranged in the image-like data structure, so that each of one of the rows or the columns or the channels of the image-like data structure corresponds to one of the plurality of properties of one of the plurality of items at the plurality of points, and each of one other of the rows or the columns or the channels of the image-like data structure corresponds to one the plurality of properties of the plurality of items at one of the plurality of points, and each of yet one other of the rows or the columns or the channels of the image-like data structure corresponds to the plurality of properties of one of the plurality of items at one of the plurality of points. At 906, the attribute of the object may be determined at the pre-determined point using a pre-determined rule based on the image-like data structure.

According to the invention the object is a vehicle.

The items include or are lane markings, road boundaries, guard rails, or barriers.

According to various embodiments, the plurality of points may include or may be past time points, and wherein the pre-determined point is a time point succeeding the plurality of time points; or the plurality of points may include or may be future time points, and wherein the pre-determined point is a time point preceding the plurality of time points.

The plurality of points may include or may be past spatial points along a past trajectory of the object, and wherein the pre-determined point is a location succeeding the plurality of past spatial points; or the plurality of points may include or may be future spatial points along a future trajectory of the object, and wherein the pre-determined point is a location preceding the plurality of future spatial points.

According to the invention, the plurality of properties includes at least one of an x position, a y position points, a validness flag, a lane marking type flag, or a color flag.

The pre-determined rule takes image data as input data.

According to the invention the pre-determined rule includes or is be a neural network.

According to various embodiments, the computer implemented method may further include the following step carried out by the computer hardware components: assigning a pre-determined value to an entry of the image-like data structure if a property is not available for the object and the point corresponding to the entry.

According to the invention, the computer implemented method further includes the following step carried out by the computer hardware components: estimating a potential risk of collision based on the determined attribute; and/or determining a trajectory of the object to be followed for autonomous motion of the object based on the determined attribute; and/ or determining a maneuver to be executed based on the determined attribute.

According to various embodiments, the maneuver to be executed may include or may be at least one of: accelerating, braking, steering, changing lane to the left, changing lane to the right, outputting a warning indication, switching on hazard warning lights, or activating a horn.

Each of the steps 902, 904, 906, and the further steps described above may be performed by computer hardware components.

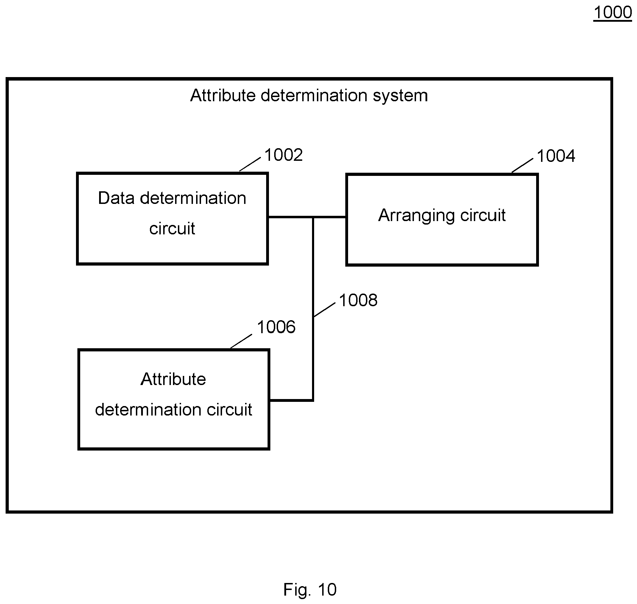

Fig. 10 shows an attribute determination system 1000.

The attribute determination system 1000 may include a data determination circuit 1002, an arranging circuit 1004, and an attribute determination circuit 1006.

The data determination circuit 1002 may be configured to determine data representing a plurality of properties of a plurality of items of a vicinity of an object at a plurality of points along a trajectory of the object.

The arranging circuit 1004 may be configured to arrange the data in a multi-channel image-like data structure, the multi-channel image-like data structure having a plurality of columns, a plurality of rows, and a plurality of channels, wherein the data is arranged in the image-like data structure, so that each of one of the rows or the columns or the channels of the image-like data structure corresponds to one of the plurality of properties of one of the plurality of items at the plurality of points, and each of one other of the rows or the columns or the channels of the image-like data structure corresponds to one the plurality of properties of the plurality of items at one of the plurality of points, and each of yet one other of the rows or the columns or the channels of the image-like data structure corresponds to the plurality of properties of one of the plurality of items at one of the plurality of points.

The attribute determination circuit 1006 may be configured to determine the attribute of the object at a pre-determined point using a pre-determined rule based on the image-like data structure.

The data determination circuit 1002, the arranging circuit 1004, and the attribute determination circuit 1006 may be coupled with each other, e.g. via an electrical connection 1008, such as e.g. a cable or a computer bus or via any other suitable electrical connection to exchange electrical signals.

A "circuit" may be understood as any kind of a logic implementing entity, which may be special purpose circuitry or a processor executing a program stored in a memory, firmware, or any combination thereof.

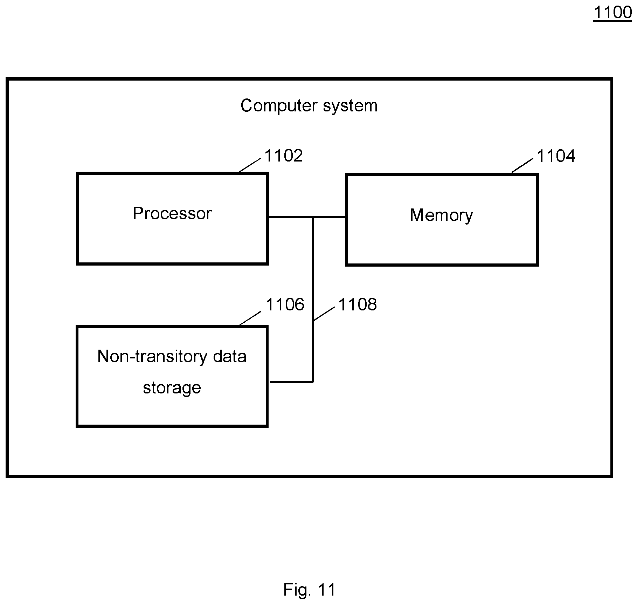

Fig. 11 shows a computer system 1100 with a plurality of computer hardware components configured to carry out steps of a computer implemented method for determining an attribute of an object at a pre-determined point according to various embodiments. The computer system 1100 may include a processor 1102, a memory 1104, and a non-transitory data storage 1106.

The processor 1102 may carry out instructions provided in the memory 1104. The non-transitory data storage 1106 may store a computer program, including the instructions that may be transferred to the memory 1104 and then executed by the processor 1102.

The processor 1102, the memory 1104, and the non-transitory data storage 1106 may be coupled with each other, e.g. via an electrical connection 1108, such as e.g. a cable or a computer bus or via any other suitable electrical connection to exchange electrical signals.

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the attribute determination system 1000 and/or for the computer system 1100.

### Reference numeral list

- 100: illustration of a vehicle
- 102: vehicle
- 104: arrow
- 120: illustration of the vehicle
- 122: further vehicle
- 140: illustration of the vehicle
- 142: road
- 144: arrow

- 200: illustration of a convolutional neural network
- 202: source layer
- 204: convolutional kernel
- 206: destination layer

- 300: illustration of lane marking rasterization according to various embodiments
- 302: vehicle
- 304: lane marking
- 306: rasterization
- 308: one row multi-channel image

- 400: illustration of how to rasterize a whole road structure according to various embodiments
- 402: image
- 404: barrier
- 406: static-context image
- 500: illustration of how to represent the complete driving scene according to various embodiments
- 502: scenario
- 504: vehicle's past trajectory
- 506: trajectory encoder
- 508: latent code
- 510: reshape operation
- 512: multiple channels
- 514: concatenation
- 516: 2D multi-channel image

- 600: illustration of an application of the 2D image-like data structure for trajectory prediction according to various embodiments
- 602: deep neural network
- 604: predicted future trajectory

- 700: illustration of an example of a road rasterization of a highway according to various embodiments
- 702: vehicle
- 704: highway
- 706: multi-channel image like data structure
- 708: arrow
- 710: arrow
- 712: arrow
- 714: arrow

- 800: illustration of an example of a road rasterization of a highway according to various embodiments
- 802: vehicle
- 804: highway
- 806: multi-channel image like data structure
- 808: arrow
- 810: arrow
- 812: arrow

- 900: flow diagram illustrating a method for determining an attribute of an object at a pre-determined point according to various embodiments
- 902: step of determining data representing a plurality of properties of a plurality of items of a vicinity of the object at a plurality of points along a trajectory of the object
- 904: step of arranging the data in a multi-channel image-like data structure, the multi-channel image-like data structure having a plurality of columns, a plurality of rows, and a plurality of channels, wherein the data is arranged in the image-like data structure
- 906: step of determining the attribute of the object at the pre-determined point using a pre-determined rule based on the image-like data structure

- 1000: attribute determination system
- 1002: data determination circuit
- 1004: arranging circuit
- 1006: attribute determination circuit
- 1008: connection

- 1100: computer system according to various embodiments
- 1102: processor
- 1104: memory
- 1106: non-transitory data storage
- 1108: connection

## Claims

1. Computer implemented method for determining an attribute of an object at a pre-determined point and for estimating a potential risk of collision based on the determined attribute and/or for determining a trajectory of the object to be followed for autonomous motion of the object based on the determined attribute and/or for determining a maneuver to be executed based on the determined attribute,
the method comprising the following steps carried out by computer hardware components:
- determining (902) data representing a plurality of properties of a plurality of items of a vicinity of the object at a plurality of points along a trajectory of the object, wherein the object is a vehicle, wherein the items comprise lane markings, road boundaries, guard rails, or barriers, and wherein the plurality of properties comprises at least one of an x position, a y position, a validness flag, a lane marking type flag, or a color flag;
- arranging (904) the data in a multi-channel image-like data structure, the multi-channel image-like data structure having a plurality of columns, a plurality of rows, and a plurality of channels, wherein the data is arranged in the image-like data structure, so that each of one of the rows or the columns or the channels of the image-like data structure corresponds to one of the plurality of properties of one of the plurality of items at the plurality of points, and each of one other of the rows or the columns or the channels of the image-like data structure corresponds to one of the plurality of properties of the plurality of items at one of the plurality of points, and each of yet one other of the rows or the columns or the channels of the image-like data structure corresponds to the plurality of properties of one of the plurality of items at one of the plurality of points; and
- determining (906) the attribute of the object at the pre-determined point using a pre-determined rule based on the image-like data structure, wherein the pre-determined rule takes image data as input data, and wherein the pre-determined rule comprises a neural network;
wherein the plurality of points comprise past time points, and wherein the pre-determined point is a time point succeeding the plurality of time points; or
wherein the plurality of points comprise future time points, and wherein the pre-determined point is a time point preceding the plurality of time points; or wherein the plurality of points comprise past spatial points along a past trajectory of the object, and wherein the pre-determined point is a location succeeding the plurality of past spatial points;
or
wherein the plurality of points comprise future spatial points along a future trajectory of the object, and wherein the pre-determined point is a location preceding the plurality of future spatial points; and
wherein the computer implemented method further comprises the following step carried out by the computer hardware components:
estimating a potential risk of collision based on the determined attribute; and/or
determining a trajectory of the object to be followed for autonomous motion of the object based on the determined attribute; and/ or.
determining a maneuver to be executed based on the determined attribute.

2. The computer implemented method claim 1, further comprising the following step carried out by the computer hardware components:
assigning a pre-determined value to an entry of the image-like data structure if a property is not available for the object and the point corresponding to the entry.

3. The computer implemented method of at least one of claims 1 or 2, wherein the maneuver to be executed comprises at least one of:
accelerating, braking, steering, changing lane to the left, changing lane to the right, outputting a warning indication, switching on hazard warning lights, or activating a horn.

4. Computer system (1100), the computer system (1100) comprising a plurality of computer hardware components configured to carry out steps of the computer implemented method of at least one of claims 1 to 3.

5. Vehicle comprising the computer system (1100) of claim 4.

6. The vehicle of claim 5, further comprising:
a sensor configured to determine sensor data;
wherein the properties are determined based on the sensor data.

7. Non-transitory computer readable medium comprising instructions for carrying out the computer implemented method of at least one of claims 1 to 3.

## Patentansprüche

1. Durch einen Computer realisiertes Verfahren zur Ermittlung eines Attributs eines Objekts an einem vorbestimmten Punkt und zur Schätzung eines möglichen Risikos einer Kollision basierend auf dem ermittelten Attribut und/oder zur Ermittlung einer Trajektorie des Objekts, der gefolgt werden soll, für eine autonome Bewegung des Objekts basierend auf dem ermittelten Attribut und/oder zur Ermittlung eines auszuführenden Manövers basierend auf dem ermittelten Attribut,
wobei das Verfahren die folgenden durch Computerhardwarekomponenten ausgeführten Schritte umfasst:
- Ermitteln (902) von Daten, die eine Vielzahl von Eigenschaften einer Vielzahl von Elementen in einer Nähe des Objekts darstellen, an einer Vielzahl von Punkten entlang einer Trajektorie des Objekts, wobei das Objekt ein Fahrzeug ist, wobei die Elemente Spurmarkierungen, Stra-βenbegrenzungen, Leitplanken oder Barrieren umfassen, und wobei die Vielzahl von Eigenschaften eine x-Position und/oder eine y-Position und/oder ein Gültigkeit-Flag und/oder ein Spurmarkierungstyp-Flag und/oder ein Farb-Flag umfasst;
- Anordnen (904) der Daten in einer bildähnlichen Mehrkanaldatenstruktur, wobei die bildähnliche Mehrkanaldatenstruktur eine Vielzahl von Spalten, eine Vielzahl von Zeilen und eine Vielzahl von Kanälen aufweist, wobei die Daten in der bildähnlichen Datenstruktur derart angeordnet sind, dass jede(r) der Zeilen oder der Spalten oder der Kanäle der bildähnlichen Datenstruktur einer der Vielzahl von Eigenschaften eines der Vielzahl von Elementen an der Vielzahl von Punkten entspricht, und jede/jeder von einer/einem anderen der Zeilen oder der Spalten oder der Kanäle der bildähnlichen Datenstruktur einer der Vielzahl von Eigenschaften der Vielzahl von Elementen an einem der Vielzahl von Punkten entspricht, und jede/jeder von noch einer/einem anderen der Zeilen oder der Spalten oder der Kanäle der bildähnlichen Datenstruktur der Vielzahl von Eigenschaften eines der Vielzahl von Elementen an einem der Vielzahl von Punkten entspricht; und
- Ermitteln (906) des Attributs des Objekts an dem vorbestimmten Punkt unter Verwendung einer vorbestimmten Regel basierend auf der bildähnlichen Datenstruktur, wobei die vorbestimmte Regel Bilddaten als Eingangsdaten nimmt, und wobei die vorbestimmte Regel ein neuronales Netz umfasst;
wobei die Vielzahl von Punkten vorherige Zeitpunkte umfasst, und wobei der vorbestimmte Punkt ein Zeitpunkt ist, der der Vielzahl von Zeitpunkten folgt; oder
wobei die Vielzahl von Punkten zukünftige Zeitpunkte umfasst, und wobei der vorbestimmte Punkt ein Zeitpunkt ist, der der Vielzahl von Zeitpunkten vorausgeht; oder
wobei die Vielzahl von Punkten vorherige räumliche Punkte entlang einer vorherigen Trajektorie des Objekts umfasst, und wobei der vorbestimmte Punkt ein Ort ist, der der Vielzahl von vorherigen räumlichen Punkten folgt; oder
wobei die Vielzahl von Punkten zukünftige räumliche Punkte entlang einer zukünftigen Trajektorie des Objekts umfasst, und wobei der vorbestimmte Punkt ein Ort ist, der der Vielzahl von zukünftigen räumlichen Punkten vorausgeht; und
wobei das durch einen Computer realisierte Verfahren ferner die folgenden Schritte, ausgeführt durch die Computerhardwarekomponenten, umfasst:
Schätzen eines möglichen Risikos einer Kollision basierend auf dem ermittelten Attribut; und/oder
Ermitteln einer Trajektorie des Objekts, der gefolgt werden soll, für eine autonome Bewegung des Objekts basierend auf dem ermittelten Attribut; und/oder
Ermitteln eines auszuführenden Manövers basierend auf dem ermittelten Attribut.

2. Durch einen Computer realisiertes Verfahren nach Anspruch 1, das ferner den durch die Computerhardwarekomponenten ausgeführten folgenden Schritt umfasst, dass:
ein vorbestimmter Wert einem Eintrag der bildähnlichen Datenstruktur zugeordnet wird, wenn eine Eigenschaft für das Objekt nicht verfügbar ist und der Punkt dem Eintrag entspricht.

3. Durch einen Computer realisiertes Verfahren nach Anspruch 1 oder 2, wobei das auszuführende Manöver umfasst:
Beschleunigen und/oder Bremsen und/oder Lenken und/oder Spurwechsel nach Links und/oder Spurwechsel nach rechts und/oder Ausgeben eines Warnhinweises und/oder Einschalten des Warnblinkers und/oder Aktivieren einer Hupe.

4. Computersystem (1100), wobei das Computersystem (1100) eine Vielzahl von Computerhardwarekomponenten umfasst, die ausgestaltet sind, um Schritte des durch einen Computer realisierten Verfahrens nach einem der Ansprüche 1 bis 3 durchzuführen.

5. Fahrzeug, umfassend das Computersystem (1100) nach Anspruch 4.

6. Fahrzeug nach Anspruch 5, ferner umfassend:
einen Sensor, der ausgestaltet ist, um Sensordaten zu ermitteln;
wobei die Eigenschaften basierend auf den Sensordaten ermittelt werden.

7. Nichttransitorisches von einem Computer lesbares Medium, umfassend Anweisungen zur Ausführung des durch einen Computer realisierten Verfahrens nach einem der Ansprüche 1 bis 3.

## Revendications

1. Procédé mis en oeuvre par ordinateur pour déterminer un attribut d'un objet à un point prédéterminé et pour estimer un risque potentiel de collision sur la base de l'attribut déterminé et/ou pour déterminer une trajectoire de l'objet à suivre pour un mouvement autonome de l'objet sur la base de l'attribut déterminé et/ou pour déterminer une manoeuvre à exécuter sur la base de l'attribut déterminé,
le procédé comprenant les étapes suivantes exécutées par des composants matériels d'ordinateur et consistant à :
- déterminer (902) des données représentant une pluralité de propriétés d'une pluralité d'éléments d'un voisinage de l'objet à une pluralité de points le long d'une trajectoire de l'objet, dans lequel l'objet est un véhicule, dans lequel les éléments comprennent des marquages de voie, des limites de route, des glissières de sécurité ou des barrières, et dans lequel la pluralité de propriétés comprend une position x, une position y, un indicateur de validité, un indicateur de type de marquage de voie et/ou un indicateur de couleur ;
- arranger (904) les données dans une structure de données de type image multicanal, la structure de données de type image multicanal ayant une pluralité de colonnes, une pluralité de lignes et une pluralité de canaux, dans lequel les données sont arrangées dans la structure de données de type image de telle sorte que chacun(e) des lignes, des colonnes ou des canaux de la structure de données de type image corresponde à l'une de la pluralité de propriétés de l'un de la pluralité d'éléments à la pluralité de points, et que chacun(e) d'un(e) autre des lignes, des colonnes ou des canaux de la structure de données de type image corresponde à l'une de la pluralité de propriétés de la pluralité d'éléments à l'un de la pluralité de points, et que chacun(e) d'encore un(e) autre des lignes, des colonnes ou des canaux de la structure de données de type image corresponde à la pluralité de propriétés de l'un de la pluralité d'éléments à l'un de la pluralité points ; et
- déterminer (906) l'attribut de l'objet au point prédéterminé à l'aide d'une règle prédéterminée basée sur la structure de données de type image, dans lequel la règle prédéterminée prend des données d'image comme données d'entrée, et dans lequel la règle prédéterminée comprend un réseau neuronal ;
dans lequel la pluralité de points comprend des points temporels passés et dans lequel le point prédéterminé est un point temporel succédant à la pluralité de points temporels ; ou
dans lequel la pluralité de points comprend des points temporels futurs et dans lequel le point prédéterminé est un point temporel précédant la pluralité de points temporels ; ou
dans lequel la pluralité de points comprend des points spatiaux passés le long d'une trajectoire passée de l'objet et dans lequel le point prédéterminé est un emplacement succédant à la pluralité de points spatiaux passés ; ou
dans lequel la pluralité de points comprend des points spatiaux futurs le long d'une trajectoire future de l'objet et dans lequel le point prédéterminé est un emplacement précédant la pluralité de points spatiaux futurs ; et
dans lequel le procédé mis en oeuvre par ordinateur comprend en outre l'étape suivante exécutée par les composants matériels d'ordinateur et consistant à :
estimer un risque potentiel de collision sur la base de l'attribut déterminé ; et/ou
déterminer une trajectoire de l'objet à suivre pour un mouvement autonome de l'objet sur la base de l'attribut déterminé ; et/ou
déterminer une manoeuvre à exécuter sur la base de l'attribut déterminé.

2. Procédé mis en oeuvre par ordinateur selon la revendication 1, comprenant en outre l'étape suivante exécutée par les composants matériels d'ordinateur et consistant à :
attribuer une valeur prédéterminée à une entrée de la structure de données de type image si une propriété n'est pas disponible pour l'objet et le point correspondant à l'entrée.

3. Procédé mis en oeuvre par ordinateur selon au moins l'une des revendications 1 ou 2,
dans lequel la manoeuvre à exécuter comprend au moins l'une des suivantes : accélération, freinage, braquage, changement de voie vers la gauche, changement de voie vers la droite, émission d'une indication d'avertissement, allumage des feux de détresse ou activation d'un avertisseur sonore.

4. Système d'ordinateur (1100), le système d'ordinateur (1100) comprenant une pluralité de composants matériels d'ordinateur configurés pour exécuter les étapes du procédé mis en oeuvre par ordinateur selon au moins l'une des revendications 1 à 3.

5. Véhicule comprenant le système d'ordinateur (1100) selon la revendication 4.

6. Véhicule selon la revendication 5, comprenant en outre :
un capteur configuré pour déterminer des données de capteur ;
dans lequel les propriétés sont déterminées sur la base des données de capteur.

7. Support lisible par ordinateur non transitoire comprenant des instructions pour exécuter le procédé mis en oeuvre par ordinateur selon au moins l'une des revendications 1 à 3.
